# EUROPEAN PATENT SPECIFICATION

(11) **EP 0 519 254 B1**
(45) Date of publication and mention of the grant of the patent: **24.05.1995**
(21) Application number: 92109201.1
(22) Date of filing: 01.06.1992
(51) Int. Cl.: A47J 43/26

(54) **Nutcracker device**
Nussknacker
Casse-noix

(30) Priority: 18.06.1991 IT UD910100
(43) Date of publication of application: 23.12.1992
(73) Proprietor: MICROSTAMP Srl, I-33080 S.Quirino (PN) (IT)
(72) Inventor: Munini, Dino, I-33080 S. Quirino (PN) (IT); Marcorin, Franco, I-30020 Cinto Caomaggiore (VE) (IT)
(74) Representative: Petraz, Gilberto Luigi

(56) References cited:
- EP-A- 0 217 190
- DE-A- 2 165 853
- DE-A- 2 747 059
- DE-A- 3 002 242
- FR-A- 2 079 764
- US-A- 2 590 953
- US-A- 2 656 866

## Description

This invention concerns a nutcracker device as set forth in the main claim.

To be more exact, the invention concerns a device which can be gripped and operated by hand and is suitable to break the shell of nuts and the like with an action of a mechanical type.

As is known, so as to free the edible content of walnuts, hazel-nuts and almonds and all the edible kernels inside a hard shell, it is necessary to break that outer shell.

At the present time nutcrackers are mainly used in the household which consist of two levers hinged together at one end and having a profile suitable to hold walnuts, hazel-nuts or the like.

When the nut has been positioned between the two levers, the necessary force to break the shell is applied so as to free the kernel of the fruit.

In many cases the outer shell is very strong and therefore it is hard to open the shells with the known nutcrackers.

The outcome is that the operation is not only difficult but may also be dangerous since the user may make by mistake some sharp and uncontrolled movements that may even lead to him being hurt.

The nutcrackers employed nowadays do not enable the nut to be held efficiently, and the nut may fall while being positioned in the nutcracker to be cracked, or else the nut may be shot outwards during the cracking.

Moreover, if the known nutcrackers are used, when the shell is broken, the splinters produced may be shot out violently and may hurt the user or anyone close at hand.

Besides, the splinters thus shot out are spread about and dirty the environment.

Furthermore, the force used to break the shell may be too great and may cause crumbling of the edible kernel of the fruit.

US-A-2,656,866 discloses a nutcracker with a cap and with a closed containing chamber; besides the problems due to controlling the force applied to the cap, there are problems linked to the emptying of the chamber when the nut has been broken and most often compacted in the chamber; the chamber can only be emptied then by removing the plug and inserting a pointed object to remove the compacted mass at the bottom.

EP-A-0.217.190 discloses a nutcracker which has to be dismantled to insert and extract the nut, and this causes great trouble for a user.

US-A-2,590,953 discloses a normal screw-type nutcracker with a closed container formed by two elements which can be dismantled.

FR-A-2.079.764 discloses a traditional nutcracker with an auxiliary shaft to break the small nuts in an appropriate chamber.

DE-A-3.002.242 discloses a nutcracker working by resilient percussion.

To avoid these shortcomings and achieve further advantages the present applicant has designed, tested and embodied this invention.

This invention is set forth and characterized in the main claim, while the dependent claims describe variants of the idea of the main embodiment.

The purpose of this invention is to provide a nutcracker device which enables the shell of nuts and the like to be cracked in a controlled manner so that the edible kernel can be withdrawn without crumbling.

The nutcracker device of this invention exerts a continuously growing and controlled pressure on the shell of the nut so as to apply the correct force to achieve breakage of the shell and thus not to be difficult for a user.

The nutcracker device according to the invention is easy to use, enables the nut to be properly held, makes possible a controlled breakage of the shell and prevents outward expulsion of splinters; also, it is not dangerous for the user or other people.

The nutcracker device of this invention consists of a knob constrained in the lengthwise direction, but free to rotate, in relation to a nut-holder element.

The nut-holder element comprises in its circumference a hole connected to a seating in which the nut, or the like, to be broken is positioned. This seating is approximately normal to the axis of the knob.

A pestle is located within the knob and is free to slide lengthwise, but is constrained rotatably by the knob owing to the inclusion of lengthwise guides machined within the knob.

The pestle can move axially in relation to the knob and has a rear disengagement position and a frontal position for mechanical action against a nut located in the seating.

The pestle cooperates with the nut-holder element by means of threaded portions, so that when the knob is rotated in relation to the nut-holder element, the forward or backward movement of the pestle is achieved.

If the knob is rotated in one direction, the pestle is moved forwards towards the nut held in the seating of the nut-holder element until the shell is broken.

If the knob is rotated in the opposite direction, the pestle is withdrawn within the knob so as to free the seating and to enable the remains of the shell and kernel to be removed and the seating to accommodate the next nut.

At the end of its rearward travel the pestle reaches its rear disengaged position, and the threaded portions of the pestle and nut-holder element are disengaged in that position but remain in contact.

At the same time in that rear disengaged position a resilient element acts against the pestle and keeps the male threaded portion of the pestle in close contact with the female threaded portion of the nut-holder element. This has the result that, when the knob is rotated again in the direction of forward movement, the two threaded portions mesh together at once and the pestle advances towards the nut-holder element.

The resilient element may be secured to the knob.

According to a variant the resilient element is secured to the pestle.

If the user by mistake continues rotating the knob in the direction of rearward movement, the threaded portions do not mesh and the pestle does not withdraw further.

According to a variant the nutcracker device is equipped with a rotary cover which, by rotating, enables the seating in the nut-holder element to be opened and shut so as to prevent the emergence of the shell splinters during the cracking.

According to another variant the nutcracker device of this invention comprises an axially slidable cap. This slidable cap has two stable positions, one an open position and the other a closed position to shut the hole.

The cap is constrained in the rotary direction by the nut-holder element and can slide lengthwise thereon owing to the inclusion of feathers cooperating with lengthwise grooves.

The attached figures are provided as a non-restrictive example and show some preferred embodiments of the invention. The figures show the following:-
- Fig.1: gives a view from above of the the nutcracker device according to the invention;
- Figs.2 and 3: show the section A-A of Fig.1 with the pestle in its rearward and forward positions respectively;
- Fig.4: shows the section B-B of Fig.2;
- Fig.5: is a side view of a variant of Fig.1;
- Fig.6: shows the section C-C of Fig.5 with the pestle retracted;
- Fig.7: shows the section D-D of Fig.6 with the pestle in its advanced position;
- Fig.8: shows the section E-E of Fig.6;
- Figs.9 and 10: show the section F-F of Fig.7 with the seating open and shut respectively;
- Fig.11: is a side view of a variant of Fig.1 in its open position;
- Figs.12 and 13: show a lengthwise section of the device of Fig. 11 with the slidable cap open and closed respectively;
- Fig.14: shows the section G-G of Fig.13;
- Fig.15: shows the section H-H of Fig.13.

A nutcracker device according to the invention is referenced with the number 10 in the figures.

The nutcracker device according to the invention consists of a knob 11 constrained from moving lengthwise, but free to rotate, in relation to a nut-holder element 12.

The nut-holder element 12 comprises a hole providing connection to a seating 13 wherein a nut to be cracked is positioned.

In this case the seating 13 comprises abutment elements 24 which facilitate the cracking of the nut.

In this example the nut-holder element 12 includes a cylindrical element 14 having one end cooperating with the seating 13 and its other end conformed as an abutment flange 15.

The nut-holder element 12 and cylindrical element 14 include engagement fins 25 on their outer surface so as to provide an easier grip of the nutcracker device 10 by a user.

The knob 11 comprises on its inner circumference abutment ledges 16, which butt against the abutment flange 15 and permit no lengthwise displacement and only a mutual rotation of the knob 11 and nut-holder element 12.

The knob 11 contains a pestle 17 free to slide lengthwise but rotatably constrained by the knob 11.

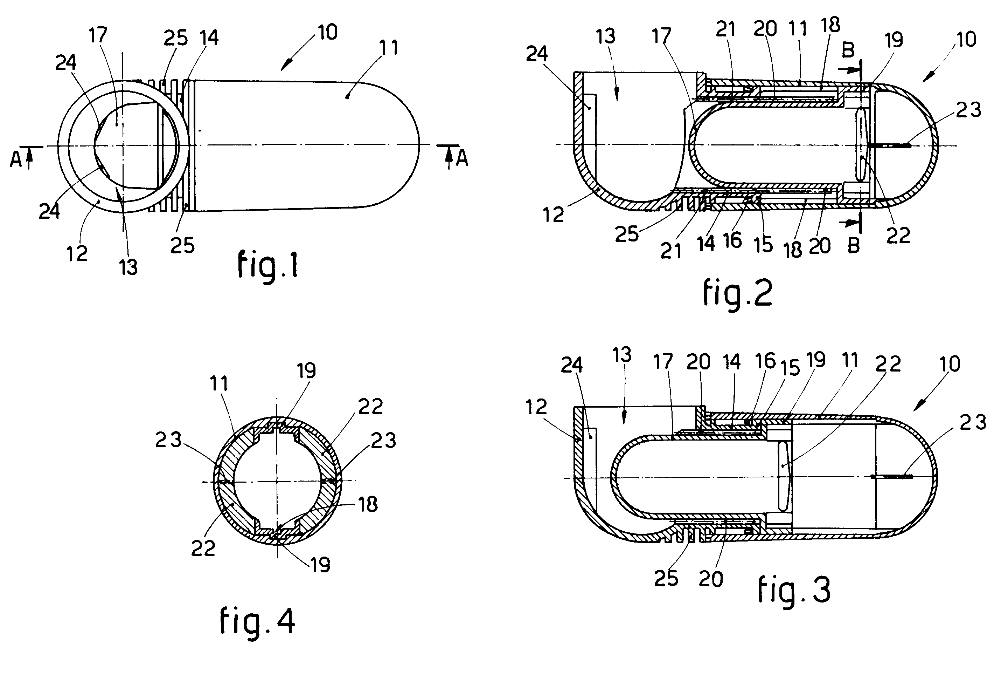

In fact, in this case the pestle 17 comprises two diametrically opposed guide elements 19 which can slide in lengthwise guides 19 machined inside the knob 11 (see Fig.4).

The pestle 17 includes outwardly a threaded portion 20 which cooperates with a related threaded portion 21 of the cylindrical element 14.

In this way, when the knob 11 is rotated in relation to the nut-holder element 12, the pestle 17 is advanced or retracted in relation to the seating 13 of the nut-holder element 12.

The advance of the pestle 17 towards the seating 13 is restricted by the presence of the abutment flange 15, which obstructs the guide elements 19.

When the pestle 17 is retracted, the threaded portions 20 and 21 are separated at the end of the travel of the pestle 17 (see Fig.2).

A resilient element 22 anchored to the guide elements 19, when it comes in contact with projections 23 secured to the inside of the knob 11, bends and enables the threaded portions 20-21 to become disengaged from each other but keeps them in close contact with each other.

Thus, as soon as the knob 11 begins rotating in the direction of advance of the pestle 17, the threaded portions 20-21 mesh with each other and the pestle 17 advances towards the nut-holder element 12.

If the user rotates the knob 11 by mistake in the direction of withdrawal, the threaded portions 20-21 do not mesh and the pestle 17 is not retracted farther.

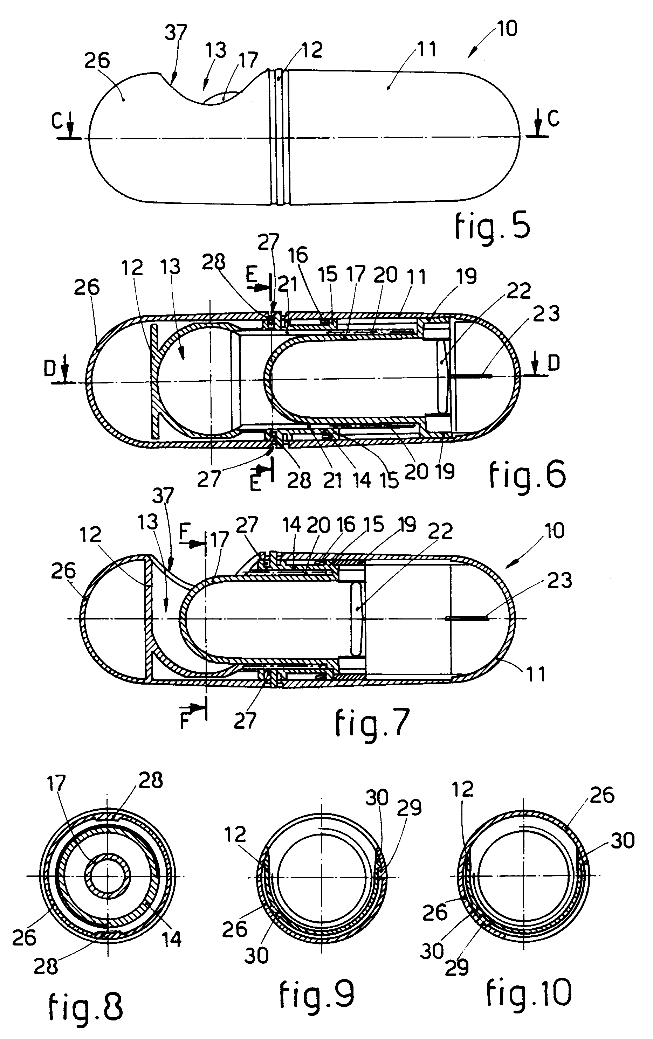

According to the variant shown in Fig.5 the nutcracker device 10 according to the invention comprises a rotary cover 26, which is constrained in the lengthwise direction but is free to rotate in relation to the nut-holder element 12.

The rotary cover 26 contains a peripheral hole 37 lapping the nut-holder element 12 partly.

In this example the nut-holder element 12 contains an annular hollow 27 within which protrusions 28 integrally fixed to the rotary cover 26 are free to slide (see Fig.8).

The rotary cover 26 has two end positions:
- an open position in which a nut can be placed in or taken from the seating 13, and
- a closed position in which the seating 13 is shut by the rotary cover 26.

For the sake of simplicity the pestle 17 is not shown in Figs.9 and 10.

To move from the open position (Fig.9) to the closed position (Fig.10) it is enough to rotate the rotary cover 26.

In this example the rotary cover 26 comprises a ledge 29, which by cooperating with relative abutment ledges 30 integrally secured to the nut-holder element 12 determines the open and closed positions of the cover 26.

According to a variant which is not shown here, spring means which assist the opening and closing operations cooperate with the rotary cover 26.

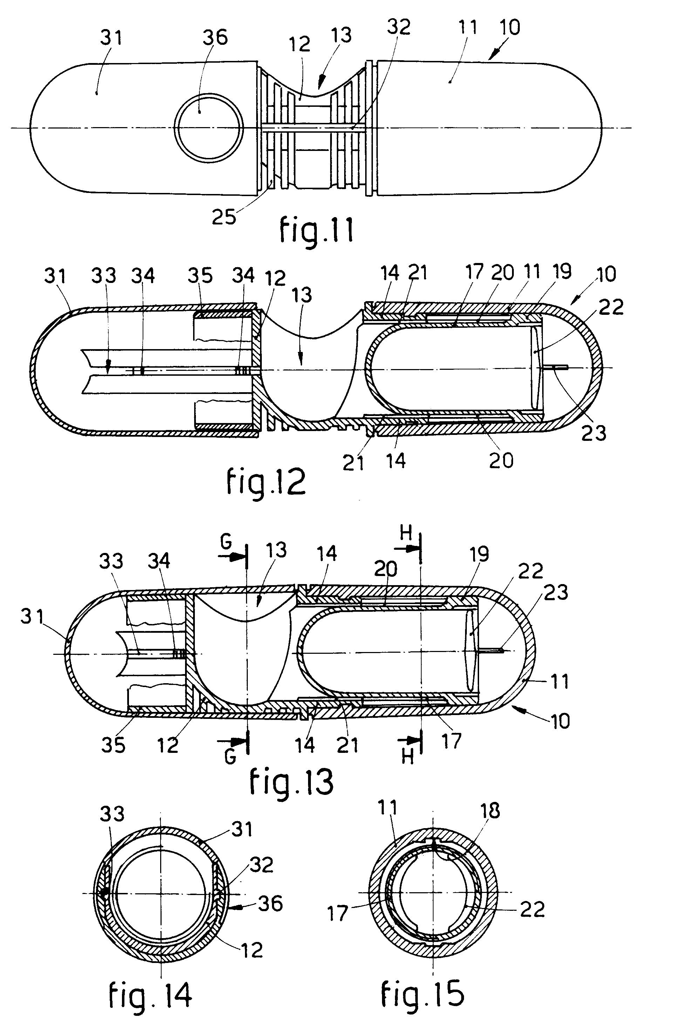

According to the variant shown in Fig. 11 the nutcracker device 10 according to the invention comprises a cap 31 able to slide in the lengthwise direction.

This slidable cap 31 is constrained in a rotary direction by the nut-holder element 12 but is free to slide in the lengthwise direction owing to the inclusion of feathers 32 which cooperate with grooves 33 machined in the slidable cap 31 in this case (see Fig.14).

The slidable cap 31 has two stable end positions:
- an open position in which the user can insert or remove a nut into or from the seating 13, and
- a closed position in which the seating 13 is shut by the cap 31.

These positions are determined by the inclusion of suitable abutment teeth 34, which cooperate with the grooves 33 and obstruct the travel of the feathers 32.

In this case the nut-holder element 12 includes a guide cylinder 35 which cooperates with the slidable cap 31.

The guide cylinder 35 too may comprise feathers 32 able to slide along the grooves 33.

In Figs.12 and 13 a part of the guide cylinder 35 has been partly removed to enable the grooves 33 to be seen.

In this example the slidable cap 31 includes recesses 36 which facilitate the gripping of the nutcracker device 10.

According to the invention the nutcracker device 10 can be made of a metal, plastic or wood and be coloured in various colours.

The outer configuration can be finished with aesthetic elements or lengthwise or circumferential outlines of a shapely character.

## Claims

1. Nutcracker device which comprises a nut-holder element (12) with a seating (13) for inserting a nut and a pestle (17) axially movable within the seating (13), the pestle (17) comprising a knob (11) and being rotatably free on the nut-holder element (12) but anchored in the lengthwise direction, resilient means (22) being included to cause an automatic return movement, the nutcracker device being characterized in that the knob (11) includes lengthwise guides (18), while the nut-holder element (12) comprises a female threaded portion (21) and the pestle (17) includes a male threaded portion (20) cooperating with that female threaded portion (21) and guide elements (19) cooperating with the lengthwise guides (18).

2. Nutcracker device as claimed in Claim 1, in which the resilient means (22) are secured to the knob (11).

3. Nutcracker device as claimed in Claim 1, in which the resilient means (22) are secured to the pestle (17).

4. Nutcracker device as claimed in any claim hereinbefore, in which there cooperates with the seating (13) a rotary cover (26) containing a peripheral hole (37) that laps at least partly the nut-holder element (12), the rotary cover (26) being secured to the nut-holder element (12) in the lengthwise direction.

5. Nutcracker device as claimed in any of Claims 1 to 3 inclusive, in which there cooperates with the seating (13) a slidable cap (31) able to move in the lengthwise direction in relation to the nut-holder element (12) and anchored to the latter (12) in a rotary direction.

6. Nutcracker device as claimed in Claim 5, in which the slidable cap (31) has an open position and a closed position.

## Patentansprüche

1. Nußknacker, der ein Nußhalteelement (12) mit einem Sitz (13) zum Einsetzen einer Nuß und einem im Sitz (13) axial bewegbaren Stempel (17) aufweist, wobei der Stempel (17) mit einem am Nußhalteelement (12) frei drehbaren, aber in Längsrichtung verankerten Handgriff (11) versehen ist, und ferner federnde Organe (22) zum Hervorrufen einer automatischen Retourbewegung vorgesehen sind, **dadurch gekennzeichnet**, daß der Handgriff (11) Längsführungen (18) und das Nußhalteelement (12) ein Innengewinde (21) aufweist, sowie der Stempel (17) ein mit diesem Innengewinde (21) zusammenwirkendes Außengewinde (20) und mit den Längsführungen (18) zusammenwirkende Führungselemente (19) besitzt.

2. Nußknacker nach Anspruch 1, bei dem die federnden Organe (22) am Handgriff (11) befestigt sind.

3. Nußknacker nach Anspruch 1, bei dem die federnden Organe (22) am Stempel (17) befestigt sind.

4. Nußknacker nach einem der vorstehenden Ansprüche, bei dem mit dem Sitz (13) eine drehbare Abdeckung (26) zusammenwirkt, die eine periphere Öffnung (37) aufweist, die mindestens teilweise das Nußhalteelement (12) überlappt, wobei die drehbare Abdeckung (26) in Längsrichtung am Nußhalteelement (12) gesichert ist.

5. Nußknacker nach einem der Ansprüche 1 bis 3, bei dem mit dem Sitz (13) eine verschiebbare Abdeckung (31) zusammenwirkt, die in bezug auf das Nußhalteelement (12) in Längsrichtung bewegbar und an diesem in Drehrichtung verankert ist.

6. Nußknacker nach Anspruch 5, bei dem die verschiebbare Abdeckung (31) eine Offenstellung und eine Schließstellung aufweist.

## Revendications

1. Système de casse-noix qui comprend un élément porte-noix (12), avec un logement (13) pour l'introduction d'une noix, et un pilon (17) capable de se mouvoir de manière axiale à l'intérieur du logement (13), le pilon (17) comprenant un pommeau (11) et étant libre de tourner sur l'élément porte-noix (12) mais fixé dans la direction de la longueur, des moyens élastiques (22) étant présents pour provoquer un mouvement automatique de retour, le système de casse-noix étant caractérisé en ce que le pommeau (11) inclut des guides longitudinaux (18), tandis que l'élément porte-noix (12) comprend une portion filetée mâle (20) et le pilon (17) présente une portion filetée femelle (21) et des éléments guides (19) collaborant avec les guides longitudinaux (18).

2. Système de casse-noix conformément à la revendication 1, dans lequel les moyens élastiques (22) sont fixés sur le pommeau (11).

3. Système de casse-noix conformément à la revendication 1, dans lequel les moyens élastiques (22) sont fixés sur le pilon (17).

4. Système de casse-noix conformément à l'une quelconque des revendications précédentes, dans lequel collabore avec le logement (13) un fourreau rotatif (26) contenant un trou périphérique (37) qui entoure au moins en partie l'élément porte-noix (12), le fourreau rotatif (26) étant fixé à l'élément porte-noix (12) dans la direction longitudinale.

5. Système de casse-noix conformément à l'une quelconque des revendications 1 à 3, dans lequel collabore avec le logement (13) un chapeau coulissant (31) capable de se mouvoir dans la direction longitudinale par rapport à l'élément porte-noix (12) et fixé à ce dernier (12) dans une direction rotatoire.

6. Système de casse-noix conformément à la revendication 5, dans lequel le chapeau coulissant (31) possède une position ouverte et une position fermée.
